# EUROPEAN PATENT APPLICATION

(11) **EP 4 403 535 A1**
(43) Date of publication of application: **24.07.2024**
(21) Application number: 21938152.2
(22) Date of filing: 17.11.2021
(51) Int. Cl.: C04B 35/01, C04B 35/14, C04B 35/03, C04B 35/10

(54) **LOW-TEMPERATURE CO-FIRED CERAMIC POWDER, PREPARATION METHOD THEREFOR AND APPLICATION THEREOF**

(30) Priority: 15.09.2021 CN 202111081803
(71) Applicant: Zhejiang Siramic Technology Co., Ltd., Dongyang, Zhejiang 322118 (CN)
(72) Inventor: LIU, Feng, Dongyang Zhejiang 322118 (CN); LIANG, Yongyuan, Dongyang Zhejiang 322118 (CN); LV, Tan, Dongyang Zhejiang 322118 (CN); JIN, Hangfeng, Dongyang Zhejiang 322118 (CN)
(74) Representative: Leinweber & Zimmermann
(86) International application number: PCT/CN2021/131257
(87) International publication number: WO 2023/040035

(57) **Abstract**

The present invention relates to a low-temperature co-fired ceramic powder and a preparation method and application thereof. The material composition of the low-temperature co-fired ceramic powder is xRO-yM₂O₃-zXO₂, where R is at least one of Mg, Ca, Ba, Zn, Cu, and Pb, M is at least one of B, Al, Co, In, Bi, Nd, Sm, and La, X is at least one of Si, Ge, Sn, Ti, Zr, and Hf, 0 ≤ x ≤ 85 wt%, 15 wt% ≤ y ≤ 90 wt%, 10 wt% ≤ z ≤85 wt%, and x + y + z = 1; and the low-temperature co-fired ceramic powder is obtained by high-temperature melting, quenching, and recrystallization treatment. The temperature of high-temperature melting is 1,200°C to 1,600°C, and the temperature of recrystallization treatment is 500°C to 900°C.

## Description

### TECHNICAL FIELD

The present invention relates to a low-temperature co-fired ceramic powder and a preparation method and application thereof, and specifically to a method for preparing a full-solid phase low-temperature co-fired ceramic material with low dielectric loss by glass recrystallization treatment, thereby obtaining a multi-component composite low-temperature co-fired ceramic material with low dielectric loss, which belongs to the field of low-temperature co-fired ceramic preparation.

### BACKGROUND

The low-temperature co-fired ceramic (LTCC) technology is one of the core technologies for passive integration and package connection. In the LTCC technology, low-temperature sintered ceramic powder is made into green ceramic tapes, desired circuit patterns are made on the green ceramic tapes by perforation, micro-hole grouting, electrode printing, and other processes. A variety of passive components (e.g., capacitors, resistors, filters, couplers, etc.) may be embedded in multiple layers of ceramic substrates, which are then laminated together and sintered below 950°C to make a three-dimensional high-density circuit or a three-dimensional circuit substrate with built-in passive components. IC and active devices may be mounted on a surface thereof to make a passive/active integrated functional module, which is particularly suitable for high-frequency communication components. Because of its excellent electrical, mechanical, thermal, and technological properties, the LTCC technology has become a core technology for the miniaturization, integration, and modularization of electronic components, and has been widely applied in aviation, aerospace, military, automotive electronics, wireless communication, and other fields. In order to realize the high-speed wireless information transmission of mass data in the future, new-generation LTCC passive components need to meet the requirements of high frequency, broadband, and low loss, and LTCC ceramic materials with low dielectric loss are the foundation and key to realize the above technology. Therefore, it is very important to develop LTCC microwave ceramic materials with low dielectric loss which can meet a frequency of 30 GHz or even above 100 GHz.

The most typical systems of LTCC materials are glass+ceramic and microcrystalline glass systems. In order to meet the technological requirement that an LTCC material can be co-fired with metal electrodes (such as gold, silver, or copper electrodes) below 950°C, it is a common practice to introduce a glass phase into the ceramic material, but the glass phase with a disordered structure tends to cause the great intrinsic loss of the material. How to achieve good microwave performance of LTCC materials while keeping low sintering temperature is a difficult point for LTCC materials.

Many researchers of LTCC materials have been doing a lot of useful work for a long time to try to tackle this problem: glass phase-free LTCC microwave dielectric materials based on low-melting point crystalline compounds, such as molybdate compounds, tungstate compounds, tellurate compounds, phosphate compounds, and other compounds; LTCC microwave dielectric materials of Li-Nb-Ti-O system based on low-melting point liquid-phase sintering aids; and novel glass phase-free low-loss LTCC dielectric materials obtained by adopting the cold-sintering technique. Although most of the above novel LTCC dielectric material systems show excellent dielectric properties and sintering properties, these material systems still have problems, such as complex composition, unsatisfactory stability, and special and sensitive sintering processes, and it is difficult for these material systems to cooperate with other materials to form compatible material systems, so there is still a long way to go from practical application.

### TECHNICAL SOLUTION

In order to overcome the defect in which the performance of LTCC materials decreases due to the introduction of glass phase, the present invention proposes a full-crystalline phase LTCC material and a preparation method therefore, and particularly discloses a full-crystalline phase low-temperature co-fired ceramic powder and a preparation method and application thereof.

In a first aspect, the present invention provides a low-temperature co-fired ceramic powder. The chemical composition of the low-temperature co-fired ceramic powder is xRO-yM₂O₃-zXO₂, wherein R is at least one of Mg, Ca, Ba, Zn, Cu, and Pb, M is at least one of B, Al, Co, In, Bi, Nd, Sm, and La, X is at least one of Si, Ge, Sn, Ti, Zr, and Hf, 0 ≤ x ≤ 85 wt%, 15 wt% ≤ y <_ 90 wt%, 10 wt% ≤ z ≤85 wt%, and x + y + z = 1. The low-temperature co-fired ceramic powder is obtained by high-temperature melting, quenching, and recrystallization treatment, the temperature of high-temperature melting being 1,200°C to 1,600°C and the temperature of recrystallization treatment being 500°C to 900°C.

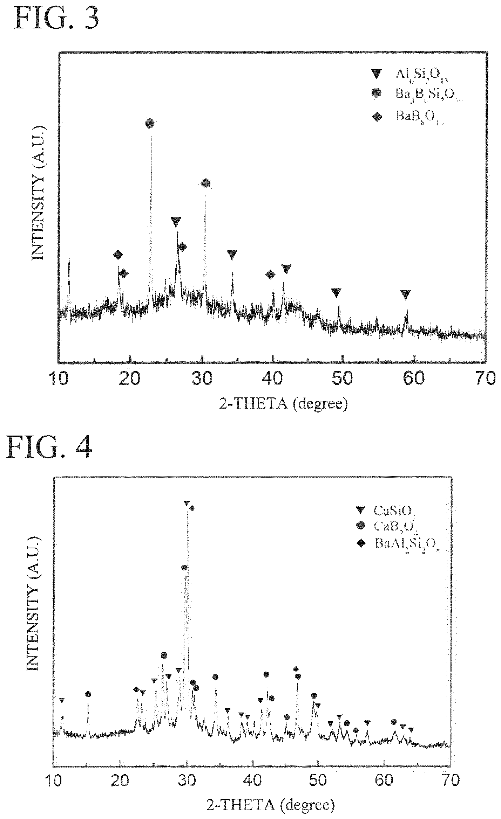

Preferably, when R comprises at least one of Mg, Ca, and Ba and at least one of Zn, Cu, and Pb, M comprises at least one of B, Co, In, and Bi and at least one of Al, Nd, Sm, and La, X is at least one of Si, Ge, Sn, Ti, Zr, and Hf, 0 ≤ x ≤ 50 wt%, 40 wt% ≤ y ≤ 90 wt%, and 10 wt% ≤ z ≤ 60 wt%, the low-temperature co-fired ceramic powder is a glass-recrystallized material with a low softening point. With the above composition, it is easier to form R₃M₆X₂O₁₆, RM₈O₁₃, and other phases with a low softening point (e.g., FIG. 3). Preferably, in the glass-recrystallized material with the low softening point, 20 wt% ≤ x ≤ 30 wt%, 40 wt% ≤ y ≤ 60 wt%, 20 wt% ≤ z ≤ 30 wt%, and x + y + z = 100 wt%.

Preferably, the melting point of this low-temperature co-fired ceramic powder is less than 850°C, more preferably less than or equal to 750°C.

Preferably, when R is at least one of Mg, Ca, Ba, Zn, and Cu, M is at least one of B, Al, Co, In, Bi, Nd, Sm, and La, X is at least one of Si, Ge, Sn, Ti, Zr, and Hf, 0 ≤ x ≤ 70 wt%, 15 wt% ≤ y < 40 wt% and 15 wt% ≤ z ≤ 85 wt%, the low-temperature co-fired ceramic powder is a glass-recrystallized material with a high softening point. Preferably, in the glass-recrystallized material with the high softening point, 40 wt% ≤ x ≤ 50 wt%, 20 wt% ≤ y ≤ 30 wt%, 30 wt% ≤ z ≤ 40wt%, and x + y + z = 100 wt%.

Preferably, the melting point of this low-temperature co-fired ceramic powder is greater than or equal to 850°C, more preferably greater than or equal to 950°C.

Preferably, the average particle size of the low-temperature co-fired ceramic powder is 0.5 µm to 3 µm, and the maximum particle size is less than or equal to 15 µm.

In a second aspect, the present invention provides a preparation method for a low-temperature co-fired ceramic powder, which comprises:
(1) respectively weighing and mixing RO powder, M₂O₃ powder and XO₂ powder according to a chemical composition of the low-temperature co-fired ceramic powder to give a material powder;
(2) melting the material powder at a high temperature of 1,200°C to 1,600°C, and then quenching and regrinding the melt to give a glass powder;
(3) subjecting the obtained glass powder to a recrystallization treatment at 500°C to 900°C to give the low-temperature co-fired ceramic powder.

Preferably, the quenching method is water quenching or oil quenching. Water quenching is the most common quenching method, while other methods, such as oil quenching, have the problems of high cost and troublesome cleaning.

Preferably, the time of the recrystallization treatment is 4 to 8 hours, preferably 6 hours.

Preferably, the temperature of the recrystallization treatment is 600°C to 800°C, more preferably 600°C or 800°C.

In a third aspect, the present invention provides a low-temperature co-fired ceramic material, which is obtained by shaping the above mentioned low-temperature co-fired ceramic powder and then sintering at 750°C to 950°C.

In a fourth aspect, the present invention provides a low-temperature co-fired ceramic material. The aforementioned glass-recrystallized material with the low softening point and the aforementioned glass-recrystallized material with the high softening point are mixed, shaped, and sintered at 850°C to 950°C to give the low-temperature co-fired ceramic material.

Preferably, the mass of the glass-recrystallized material with the low softening point is not higher than 20 wt% of the total mass of the glass-recrystallized material with the low softening point and the glass-recrystallized material with the high softening point, preferably not higher than 15 wt%.

Preferably, the low-temperature co-fired ceramic material is obtained by sintering a low-temperature synthesized composite ceramic powder at 850°C to 920°C.

### BENEFICIAL EFFECT

The advantages of the present invention are as follows.

The present invention proposes to prepare a multi-component composite low-loss LTCC microwave dielectric material by glass recrystallization treatment. The oxide materials which can form glass ceramic are used to prepare glass raw material powder by adopting high-temperature water quenching and ball milling processes, and then the glass is recrystallized through high-temperature calcination process to prepare the multi-component composite crystalline-phase ceramic material. The comprehensive properties of the material, such as crystalline-phase composition, final softening point, sintering temperature, microwave dielectric properties can be regulated by adjusting the composition and proportion of raw materials. Since the material is composed of multiple components and multiple phases, the material obtained by this method has the advantage that the comprehensive properties, such as microwave dielectric properties, sintering process system, mechanical and chemical stability, etc., are easy to be regulated. Moreover, the preparation method of the present invention first undergoes high-temperature melting, and then adopts calcination and recrystallization to form a full-solid phase material that can reduce the loss.

### BRIEF DESCRIPTION OF DRAWINGS

FIG. 1 shows an XRD pattern of a glass-recrystallized LTCC ceramic powder in Example 1;
FIG. 2 shows an SEM photo of a ceramic obtained by sintering the LTCC ceramic powder prepared in Example 1 at low temperature;
FIG. 3 shows an XRD pattern of a crystallized material with a low softening point in Example 2;
FIG. 4 shows an XRD pattern of a multi-component composite LTCC ceramic powder in Example 3; and
Table 1 of FIG. 5 shows the composition and property parameters of a low-temperature co-fired ceramic bulk material prepared by the present invention.

### DETAILED DESCRIPTION OF PREFERRED EMBODIMENTS

The present invention will be further illustrated by the following embodiments below, and it should be understood that the following embodiments are only used to illustrate the present invention rather than to limit it.

In the present disclosure, a multi-component composite high-quality full-solid phase low-temperature co-fired ceramic powder material is prepared by glass recrystallization, and on this basis, a multi-component composite high-quality full-solid phase LTCC microwave dielectric material (low-temperature co-fired ceramic material) with low electrical loss is further prepared.

Specifically, the method includes melting a glass ceramic material capable of being recrystallized by high-temperature water quenching (high-temperature melting and water quenching) to give glass powder, and calcinating the glass powder at high temperature to realize glass recrystallization, so that a multi-component composite crystalline-phase low-temperature co-fired ceramic powder is obtained. The comprehensive properties of the material, such as crystalline-phase composition, final softening point, sintering temperature, microwave dielectric properties, etc., are regulated by adjusting the composition and proportion of the low-temperature co-fired ceramic powder. Since the material is composed of multiple components and multiple phases, the material obtained by this method has the advantage that the comprehensive properties, such as microwave dielectric properties, sintering process system, mechanical and chemical stability, etc., are easy to be regulated.

In the present disclosure, the material composition of the low-temperature co-fired ceramic powder is xRO-yM₂O₃-zXO₂, wherein R is at least one of Mg, Ca, Ba, Zn, Cu, and Pb, M is at least one of B, Al, Co, In, Bi, Nd, Sm, and La, X is at least one of Si, Ge, Sn, Ti, Zr, and Hf, and x, y and z are mass percentages, with 75% ≥ x ≥ 0, 90% ≥ y ≥ 15%, 85% ≥ z ≥ 10% and x + y + z = 1. According to the different softening points and dielectric constants of the required materials, the material composition may be optimized.

For a multi-component composite crystalline-phase material with a low softening point (low-temperature co-fired ceramic powder with a low softening point), R is at least one of Mg, Ca, and Ba and at least one of Zn, Cu, and Pb, M includes at least one of B, Co, In, and Bi and at least one of Al, Nd, Sm, and La, X is at least one of Si, Ge, Sn, Ti, Zr, and Hf, and x, y and z are mass percentages, with 0 ≤ x ≤ 50 wt%, 40 wt% ≤ y ≤ 90 wt%, 10 wt% ≤ z ≤ 60 wt%, and x + y + z = 1. For example, the multi-component composite crystalline-phase material contains CaSiO₃\CaB₂O₄\BaAl₂Si₂O₈.

For a multi-component composite crystalline-phase material with a high softening point (low-temperature co-fired ceramic powder with a high softening point), R is at least one of Mg, Ca, Ba, Zn, and Cu, M is at least one of B, Al, Co, In, Bi, Nd, Sm, and La, X is at least one of Si, Ge, Sn, Ti, Zr and Hf, and x, y and z are mass percentages, with 0 ≤ x ≤ 70 wt%, 15 wt% ≤ y < 40 wt%, 15 wt% ≤ z ≤ 85wt% and x + y + z = 1. For example, the multi-component composite crystalline-phase material with the high softening point contains CaSiO₃\CaB₂O₄\CaB₂O₅.

The present invention provides a method for preparing a low-temperature co-fired ceramic powder by glass recrystallization, including quenching mixed materials into glass with high-temperature water, ball-milling the glass into glass powder, and calcining the glass powder at a certain temperature for a certain period of time to realize glass recrystallization, the calcination temperature is lower than the melting temperature of a multi-component composite material.

After being weighed in proportion, the materials are loaded into a nylon ball-milling tank for dry mixing without adding any liquid solvent. After 10 to 16 hours (e.g., 12 hours) of dry mixing, the homogeneously mixed powder materials are separated from the zirconia milling medium.

The homogeneously mixed materials are loaded into a quartz crucible, put into a heat-preserving high-temperature furnace and melted into molten glass, and the molten glass is poured into deionized water for cold quenching into glass fragment. The glass fragment is then crushed and ball-milled to give glass powder.

The glass powder is poured into an alumina crucible with a cover and put into a muffle furnace for calcination (i.e., recrystallization treatment). The calcination temperature of muffle furnace is 500°C to 900°C, and the holding time 4 to 8 hours. Preferably, the heating rate may be 1°C to 10°C/min, preferably 5°C/min.

The material obtained by calcination and recrystallization is crushed and ball-milled to give the multi-component composite-phase ceramic powder (i.e., the low-temperature co-fired ceramic powder). The resulting low-temperature co-fired ceramic powder is finely ground into a particle size of 0.5 µm to 3 µm, and the maximum particle size does not exceed 10 µm. The low-temperature co-fired ceramic powder can be used as a material for the preparation of a high-quality LTCC microwave dielectric ceramic.

Two or more types of low-temperature co-fired ceramic powders are mixed in proportion to prepare an LTCC material. The low-temperature co-fired ceramic powder used contains at least one type of multi-component composite ceramic powder with the low softening point and one or more types of multi-component composite ceramic powders with the high softening point. The mass of the glass-recrystallized material with the low softening point shall not exceed 20wt% of the total mass of the glass-recrystallized material with the low softening point and the glass-recrystallized material with the high softening point, that is, the mass ratio of the glass-recrystallized material with the low softening point to the glass-recrystallized material with the low softening point shall not exceed 1:4.

In the present invention, the softening point of the multi-component composite ceramic powder with the low-softening point is lower than 850°C, and the softening point of multi-component composite ceramic material with the high softening point is equal to or higher than 850°C. Under optimized conditions, the softening point of the multi-component composite ceramic powder with the low-softening point is lower than 800°C, and the softening point of multi-component composite ceramic material with the high softening point is equal to or higher than 900°C.

The content of the multi-component composite crystalline-phase material with the low-softening point in the multi-component composite crystalline-phase LTCC material is less than 20 wt%, and the sintering temperature of the composite LTCC material is not higher than 950°C, preferably less than or equal to 920°C. At this optimum temperature, the silver circuits obtained by co-firing with silver has excellent quality. Under optimized conditions, the content of the multi-component composite crystalline-phase material with the low softening point in the multi-component composite crystalline-phase LTCC material is less than 15 wt%, and the sintering temperature of the composite LTCC material is not higher than 920°C. The resulting LTCC material has good co-firing compatibility with silver electrodes.

In the present invention, the softening point of the low-temperature co-fired ceramic powder was measured by TMA (Thermomechanical Analysis).

In the present invention, the dielectric constant of the low-temperature co-fired ceramic bulk material was measured by Resonant Cavity Method.

In the present invention, the dielectric loss of the low-temperature co-fired ceramic bulk material was measured by Resonant Cavity Method.

In the present invention, the quality factor of the low-temperature co-fired ceramic bulk material was measured by Resonant Cavity Method.

Examples will be taken to further illustrate the present invention in detail below. It should also be understood that the following examples are only used to further illustrate the present invention rather than to limit the protection scope of the present invention. All non-essential improvements and adjustments which are made by those skilled in the art according to the above contents of the present invention shall fall within the protection scope of the present invention. The specific technological parameters of the following examples are merely one example in an appropriate range, that is, those skilled in the art can make choices within the appropriate range through the description herein, but the choices are not limited to the specific values of the following examples.

### Example 1

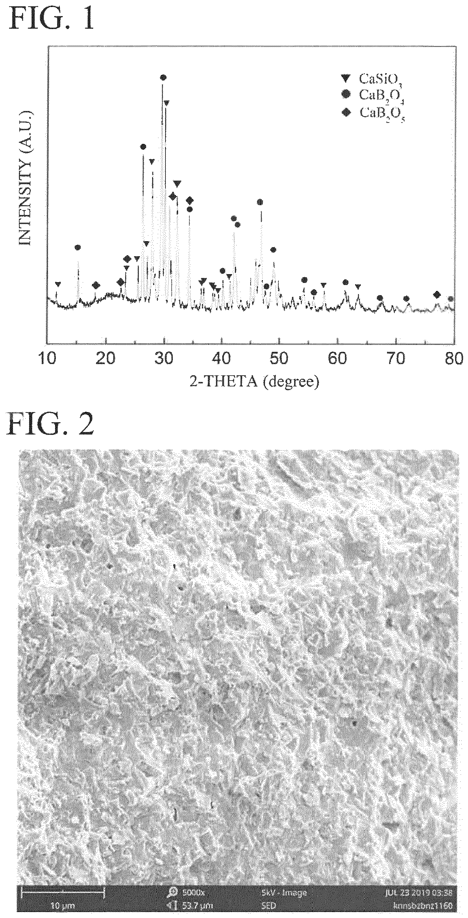

Selecting R = Ca, M = B, X = Si, x = 0.42, y = 0.26, and z = 0.32, the composition of the material could be (is) expressed as 0.42CaO-0.26B₂O₃-0.32SiO₂, CBS for short. CaCO₃, B₂O₃ and fused quartz as materials were batched in proportion, loaded into a nylon ball-milling tank, and dry-milled for 12 hours without adding any solvent, so that the materials were homogeneously mixed. The mixed materials were loaded into a quartz crucible and melted in a muffle furnace at a high temperature, the melting temperature being 1400°C. After heat preservation for 20 minutes, the melt was quenched with water into glass fragment, and the glass fragment was crushed and ball-milled to give fine glass powder. The glass powder was loaded into an alumina crucible and subjected to pre-sintering in a muffle furnace, heated to 800°C at a heating rate of 5 °C /min, kept at this temperature for 6 hours, naturally cooled, crushed and ball-milled to give a fully crystallized ceramic powder with a softening point of 972°C. An X-ray diffraction (XRD) analysis shows that the phase composition of the ceramic powder is mainly CaSiO₃, CaB₂O₄, and Ca₂B₂O₅. The XRD pattern is shown in FIG. 1.

The aforementioned multiphase ceramic powder as a material was added with PVA binder, granulated, and shaped to give a cylindrical sample green body. The green body is subjected to binder removal (rubber discharging, rubber dumping) at 450°C, and then sintered at 950°C for 2 hours to obtain a dense ceramic sample. The microwave dielectric property test shows that the dielectric constant of the resulting ceramic sample is 6.1 (at 10 GHz), the dielectric loss is 0.9 × 10⁻³, and the quality factor Q·f is about 11,000 GHz, so the ceramic sample has excellent microwave dielectric properties. The microstructure of the ceramic sample is observed through a scanning electron microscope. FIG. 2 is a scanning electron microscope photo. It can be seen that there is no glass phase in this low-temperature sintered ceramic powder material.

### Example 2

Selecting R = Ba, M = B and Al, X = Si, x = 0.25, y = (0.4 + 0.1) and z = 0.25, a ceramic material was synthesized from the materials according to a composition of 25% BaO-40% B₂O₃-10% Al₂O₃-25% SiO₂, BBAS for short. BaCO₃, B₂O₃, Al₂O₃, and fused quartz as materials were batched in proportion, and the batched materials were loaded into a nylon ball-milling tank and dry-milled for 6 hours without adding any solvent, so that the materials were homogeneously mixed. The mixed materials were loaded into a quartz crucible and melted in a glass melting furnace at a high temperature, the melting temperature being 1,400°C. After heat preservation for 20 minutes, the melt was quenched with water into glass fragments, and the glass fragments were crushed and ball-milled to give fine glass powder. The glass powder was loaded into an alumina crucible and subjected to pre-sintering in a muffle furnace, heated to 600°C at a heating rate of 5 °C /min, kept at this temperature for 6 hours, and then naturally cooled to give a fully crystallized ceramic powder (see FIG. 3) with a softening point of 630°C.

### Example 3

The CBS ceramic powder synthesized in Example 1 and the BBAS ceramic powder in Example 2 were batched at a mass ratio of 10:1. After being homogeneously mixed by ball milling, a ceramic sample were prepared according to the aforementioned sample preparation process. Specifically, the green body is subjected to binder removal at 450°C, and then sintered at 900°C for 2 hours to obtain a dense ceramic sample. The microwave dielectric property test shows that the resulting ceramic sample has excellent microwave dielectric properties. The dielectric constant was 6.2 (at 10 GHz), the dielectric loss was 1.1 × 10⁻³, and the quality factor Q·f was about 9,000 GHz. The X-ray diffraction (XRD) analysis shows that the phase composition of the ceramic powder is mainly CaSiO₃, CaB₂O₄, and BaAl₂Si₂O₈. The XRD pattern is shown in FIG. 4. The resulting material has good co-firing compatibility with silver electrodes, and can be used for the preparation of LTCC packaging substrates.

### Example 4

The preparation process of the low-temperature co-fired ceramic bulk material in Example 4 refers to Example 3, except that the mass ratio of the CBS ceramic powder synthesized in Example 1 to the BBAS ceramic powder in Example 2 is 4:1 (20%).

### Example 5

The preparation process of the low-temperature co-fired ceramic bulk material in Example 5 refers to Example 3, except that the mass ratio of the CBS ceramic powder synthesized in Example 1 to the BBAS ceramic powder in Example 2 is 17:3 (15 wt%).

### Example 6

The preparation process of the low-temperature co-fired ceramic bulk material in Example 6 refers to Example 3, except that the mass ratio of the CBS ceramic powder synthesized in Example 1 to the BBAS ceramic powder in Example 2 is 19:1 (5 wt%).

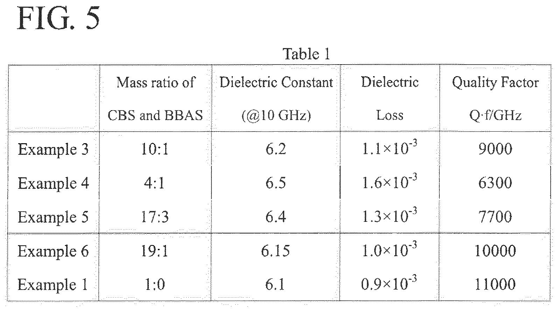

Table 1 of FIG. 5 shows the composition and property parameters of a low-temperature co-fired ceramic bulk material prepared by the present invention.

Although the quality factor of Example 1 is the highest, the sintering temperature is greater than or equal to 950°C, which cannot meet the requirement of co-firing of metals such as gold, silver, or copper. The sintering temperature of the low-temperature co-fired ceramic bulk material decreases after a specific content of multi-component composite crystalline-phase material with the low softening point is added. However, it can be seen from Table 1 of FIG. 5 and Examples 3 to 6 that with the increase of the amount of the added glass-recrystallized material with the low softening point, while the dielectric loss of the resulting low-temperature co-fired ceramic material increases, the quality factor tends to decrease. Considering the performance requirements of LTCC packaging substrates themselves, it is preferable to control the mass of the low-softening point glass-recrystallized material not to exceed 20 wt% of the total mass of the low-softening point glass-recrystallized material and the high-softening point glass-recrystallized material.

## Claims

1. A low-temperature co-fired ceramic powder,
wherein the material composition of the low-temperature co-fired ceramic powder is xRO-yM₂O₃-zXO₂,
wherein R is at least one of Mg, Ca, Ba, Zn, Cu, and Pb, M is at least one of B, Al, Co, In, Bi, Nd, Sm, and La, X is at least one of Si, Ge, Sn, Ti, Zr, and Hf, 0 ≤ x ≤ 85 wt%, 15 wt% ≤ y ≤ 90 wt%, 10 wt% ≤ z ≤85 wt%, and x + y + z = 1, and
wherein the low-temperature co-fired ceramic powder is obtained by high-temperature melting, quenching, and recrystallization treatment, the temperature of high-temperature melting being 1,200°C to 1,600°C and the temperature of recrystallization treatment being 500°C to 900°C.

2. The low-temperature co-fired ceramic powder of claim 1, wherein when R comprises at least one of Mg, Ca, and Ba and at least one of Zn, Cu, and Pb, M comprises at least one of B, Co, In, and Bi and at least one of Al, Nd, Sm, and La, X is at least one of Si, Ge, Sn, Ti, Zr, and Hf, 0 ≤ x ≤ 50 wt%, 40 wt% ≤ y ≤ 90 wt%, and 10 wt% ≤ z ≤ 60 wt%, the low-temperature co-fired ceramic powder is a glass-recrystallized material with a low softening point.

3. The low-temperature co-fired ceramic powder of claim 2, wherein the melting point of the low-temperature co-fired ceramic powder is less than 850°C.

4. The low-temperature co-fired ceramic powder of claim 3, wherein the melting point of the low-temperature co-fired ceramic powder is less than or equal to 750°C.

5. The low-temperature co-fired ceramic powder of claim 1, wherein when R is at least one of Mg, Ca, Ba, Zn, and Cu, M is at least one of B, Al, Co, In, Bi, Nd, Sm, and La, X is at least one of Si, Ge, Sn, Ti, Zr, and Hf, 0 ≤ x ≤ 70 wt%, 15 wt% ≤ y < 40 wt%, and 15 wt% ≤ z ≤ 85 wt%, the low-temperature co-fired ceramic powder is a glass-recrystallized material with a high softening point.

6. The low-temperature co-fired ceramic powder of claim 5, wherein the melting point of the low-temperature co-fired ceramic powder is greater than or equal to 850°C.

7. The low-temperature co-fired ceramic powder of claim 6, wherein the melting point of the low-temperature co-fired ceramic powder is greater than or equal to 950°C.

8. The low-temperature co-fired ceramic powder of any of claims 1 to 7, wherein the average particle size of the low-temperature co-fired ceramic powder is 0.5 µm to 3 µm, and the maximum particle size is less than or equal to 15 µm.

9. A preparation method for the low-temperature co-fired ceramic powder of any of claims 1 to 8, comprising:
(1) respectively weighing and mixing RO powder, M₂O₃ powder, and XO₂ powder according to a chemical composition of the low-temperature co-fired ceramic powder to give a material powder;
(2) melting the material powder at a high temperature of 1,200°C to 1,600°C, and then quenching and regrinding the melt to give a glass powder;
(3) subjecting the obtained glass powder to a recrystallization treatment at 500°C to 900°C to give the low-temperature co-fired ceramic powder.

10. The preparation method of claim 9, wherein the quenching method is water quenching, the time of the recrystallization treatment is 4 to 8 hours, and the temperature of the recrystallization treatment is 600°C to 800°C.

11. A low-temperature co-fired ceramic material, wherein selecting the low-temperature co-fired ceramic powder of claim 2 as a glass-recrystallized material with the low softening point and selecting the low-temperature co-fired ceramic powder of claim 5 as a glass-recrystallized material with a high softening point, mixing, shaping, and sintering at 850°C to 950°C to give the low-temperature co-fired ceramic material.

12. The low-temperature co-fired ceramic material of claim 11, wherein the mass of the glass-recrystallized material with the low softening point is not higher than 20 wt% of the total mass of the glass-recrystallized material with the low softening point and the glass-recrystallized material with the high softening point.

13. The low-temperature co-fired ceramic material of claim 12, wherein the mass of the glass-recrystallized material with the low softening point is not higher than 15 wt% of the total mass of the glass-recrystallized material with the low softening point and the glass-recrystallized material with the high softening point.
